# DEMANDE DE BREVET EUROPEEN

(11) **EP 1 864 865 A1**
(43) Date de publication de la demande: **12.12.2007**
(21) Numéro de dépôt: 07109817.2
(22) Date de dépôt: 07.06.2007
(51) Int. Cl.: B60R 19/16, B65G 69/00, B60R 19/02

(54) **Tampon amortisseur de chocs notamment pour véhicule automobile.**

(30) Priorité: 08.06.2006 FR 0605086
(71) Demandeur: Hubert, Stéphane, 38470 L'Albenc (FR); Hubert, Daphné, 07200 Ucel (FR)
(72) Inventeur: Hubert, Stéphane, 38470 L'Albenc (FR); Hubert, Daphné, 07200 Ucel (FR)
(74) Mandataire: Casalonga, Axel

(57) **Abrégé**

Tampon amortisseur de chocs, notamment pour véhicule automobile, comprenant dans un carter au moins un moyen d'amortissement principal comprenant une cage portant un galet passant au travers d'un passage d'une paroi frontale du carter et s'étendant au-delà de cette paroi et un moyen élastique interposé entre ladite cage et une paroi arrière du carter. Un moyen d'amortissement complémentaire (30) est interposé entre des parties avant et arrière dudit carter. Lorsqu'un obstacle se déplace en direction de ladite paroi arrière dudit carter, l'effet d'amortissement comprend une première phase dans laquelle le galet (25) s'enfonce dans le carter en comprimant ledit moyen élastique (23) et une seconde phase dans laquelle ladite paroi frontale du carter se rapproche de ladite paroi arrière de ce carter en comprimant ledit moyen d'amortissement complémentaire (30) et ledit moyen élastique (23) continue de se comprimer.

## Description

La présente invention concerne un tampon amortisseur de chocs, notamment pour véhicules automobiles et en particulier s'installant à l'arrière d'un camion pour venir en butée contre la paroi verticale d'un quai de chargement ou de déchargement.

Plus particulièrement, la présente invention a pour objet un perfectionnement aux tampons amortisseurs de chocs généralement décrits dans le brevet FR-A-0001446 et FR-A-0311949

Le tampon amortisseur de chocs, notamment pour véhicule automobile, comprend, selon l'invention, un carter présentant une paroi arrière d'appui et une paroi frontale et, dans ce carter, au moins un moyen d'amortissement principal comprenant une cage portant un galet dont une partie de la périphérie passe au travers d'un passage de ladite paroi frontale et s'étend au-delà de cette paroi et un moyen élastique interposé entre ladite cage et ladite paroi arrière.

Selon l'invention, ledit carter comprend au moins une partie avant comprenant ladite paroi frontale et une partie arrière comprenant ladite paroi arrière et le tampon amortisseur comprend en outre, dans ce carter, un moyen d'amortissement complémentaire interposé entre lesdites parties avant et arrière dudit carter, de telle sorte que, lorsqu'un obstacle se déplace en direction de ladite paroi arrière dudit carter, l'effet d'amortissement comprend une première phase dans laquelle le galet s'enfonce dans le carter en comprimant ledit moyen élastique dudit moyen d'amortissement principal et une seconde phase dans laquelle ladite paroi frontale de ladite partie avant du carter se rapproche de ladite paroi arrière de la partie arrière de ce carter en comprimant ledit moyen d'amortissement complémentaire et ledit moyen élastique dudit moyen d'amortissement continue de se comprimer.

Selon l'invention, ledit moyen élastique dudit moyen d'amortissement principal comprend de préférence au moins un bloc en un matériau élastique.

Selon l'invention, ledit moyen d'amortissement complémentaire comprend de préférence au moins un bloc en un matériau élastique.

Selon l'invention, ledit bloc en un matériau élastique dudit moyen d'amortissement complémentaire est de préférence interposé entre ladite paroi frontale et ladite paroi arrière dudit carter.

Selon l'invention, ladite partie avant et la partie arrière du carter comprennent de préférence des parois annulaires télescopiques déterminant un compartiment dans lequel est disposé ledit moyen d'amortissement principal.

Selon l'invention, ladite partie avant et la partie arrière du carter comprennent de préférence des parois télescopiques déterminant un compartiment dans lequel est disposé ledit moyen d'amortissement complémentaire.

Selon l'invention, ladite partie avant et la partie arrière du carter sont de préférence en forme de cuvettes opposées accouplées de façon télescopique, le bord de la partie avant étant engagé dans le bord de la partie arrière.

Selon l'invention, lesdits bords présentent de préférence des rebords en saillie d'accrochage.

Selon l'invention, ledit carter présente de préférence au moins un passage traversant d'avant en arrière, déterminé par une paroi interne de sa partie avant en saillie par rapport à ladite paroi frontale et une paroi interne de sa partie arrière en saillie par rapport à ladite paroi arrière et s'engageant dans la paroi interne de sa partie avant, ladite paroi interne de ladite partie avant présentant un épaulement interne.

La présente invention sera mieux comprise à l'étude d'un tampon amortisseur de chocs à galet, notamment pour véhicules automobiles tels que des camions, décrit à titre d'exemple non limitatif et illustré par le dessin sur lequel :

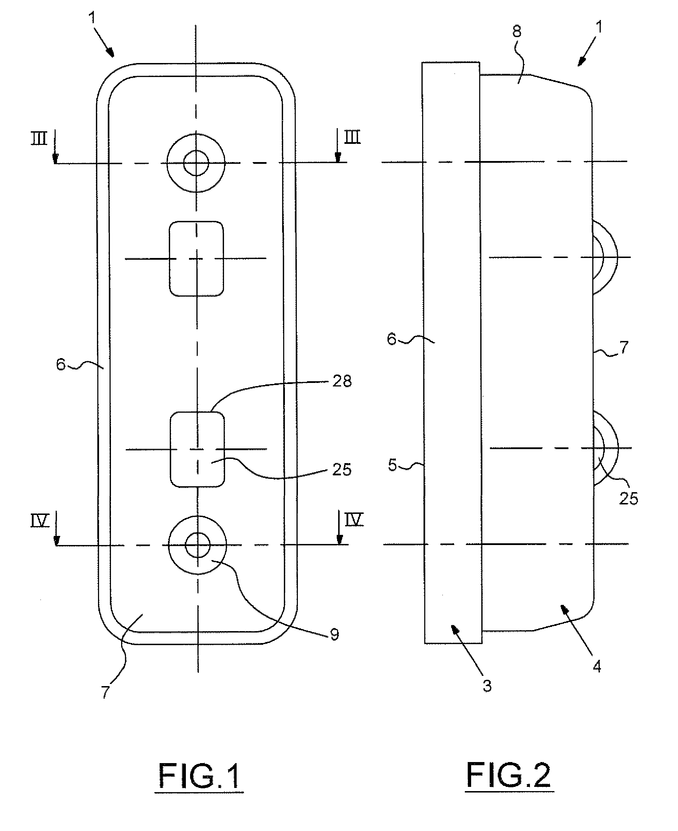

- la figure 1 représente une vue extérieure frontale d'un tampon amortisseur de chocs selon l'invention ;
- la figure 2 représente une vue extérieure de côté du tampon amortisseur de chocs de la figure 1 ;
- la figure 3 représente une coupe horizontale selon III-III du tampon amortisseur de chocs de la figure 1 ;
- la figure 4 représente une coupe horizontale selon IV-IV du tampon amortisseur de chocs de la figure 1 ;
- et la figure 5 représente une coupe verticale selon V-V du tampon amortisseur de chocs de la figure 3.

Le tampon amortisseur de chocs 1 représenté sur les figures comprend un carter 2 sensiblement parallélépipédique, allongé verticalement, qui comprend une partie arrière 3 et une partie avant 4, en forme de cuvettes accouplées de façon télescopique.

La partie arrière 3 comprend une paroi arrière verticale 5 et une paroi périphérique 6 et la partie avant 4 comprend une paroi frontale verticale 7 parallèle à la paroi arrière 5 et une paroi périphérique 8.

Le bord de la paroi périphérique 8 est engagé dans le bord de la paroi périphérique 6, ces bords présentant des rebords d'accrochage 6a et 8a engagés à force l'un en arrière de l'autre.

Le carter 2 présente, au voisinage de ses extrémités haute et basse, des passages horizontaux traversants 9, d'avant en arrière.

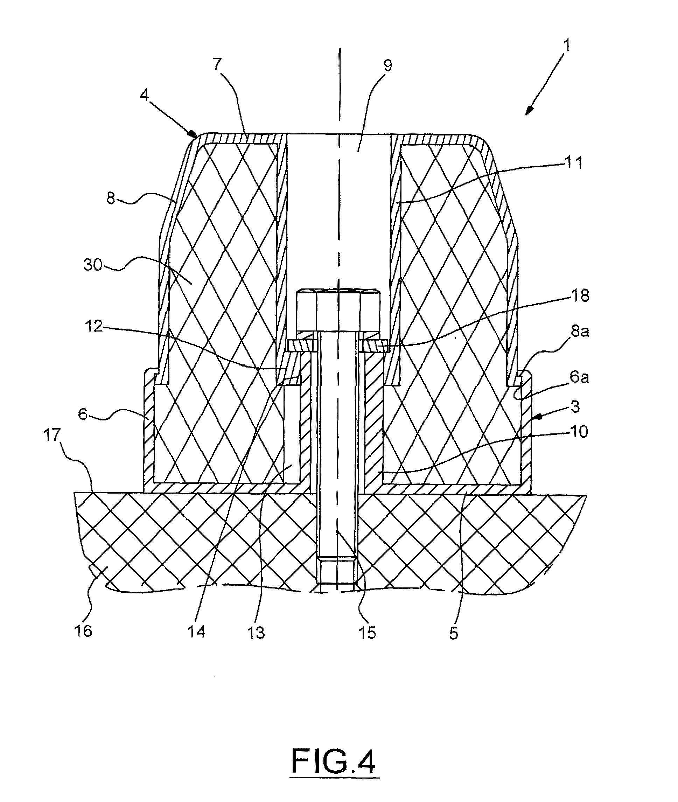

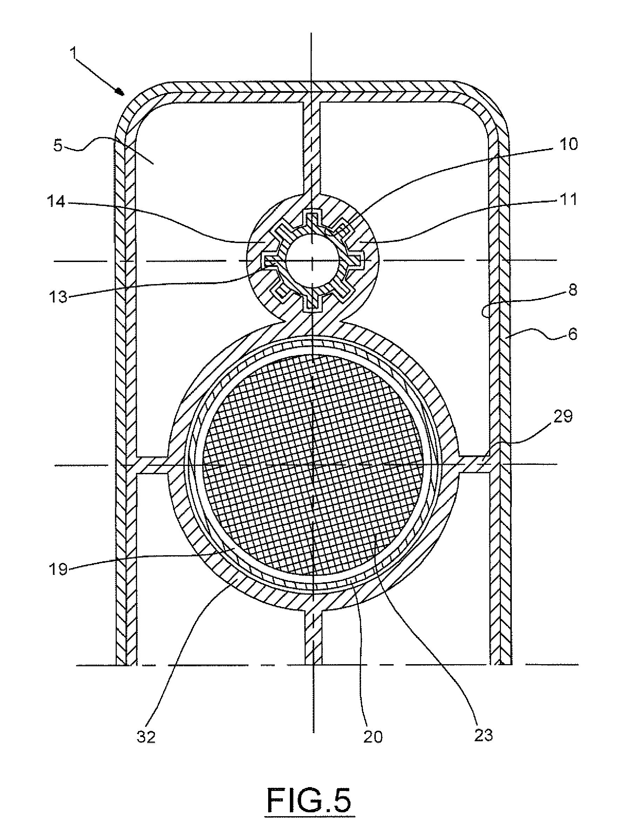

Comme le montre la figure 4, chaque passage traversant 9 est déterminé latéralement par une paroi interne annulaire 10 en saillie par rapport à la paroi arrière 5 et une paroi interne annulaire 11 en saillie par rapport à la paroi frontale 7. La paroi interne 11 est engagée dans la paroi interne 10. La partie d'extrémité de la paroi annulaire 11 présente un épaulement interne annulaire d'accrochage 12. Comme le montre la figure 5, la paroi annulaire 10 et l'épaulement annulaire 12 de la paroi annulaire 11 présentent des crans axiaux 13 et 14 de guidage et de renforcement, engagés les uns dans les autres.

Comme le montre la figure 4, le carter 2 peut être fixé par des vis de fixation 15 engagées dans chaque passage 9, au travers de la paroi interne annulaire 10, pour être vissées dans un support 16 d'un véhicule tel qu'un camion, en plaquant la paroi arrière 5 contre une face verticale 17 de ce support. La tête de chaque vis 15 vient en appui sur la face d'extrémité de la paroi annulaire 10 correspondante par l'intermédiaire d'une rondelle 18, l'épaulement annulaire 12 étant en arrière de la rondelle 18.

Ainsi, la partie avant 4 du carter 2 est déplaçable vers sa partie arrière 3 à partir d'une position initiale dans laquelle les rebords 6a et 8a sont adjacents et l'épaulement annulaire 12 est contre la rondelle 18.

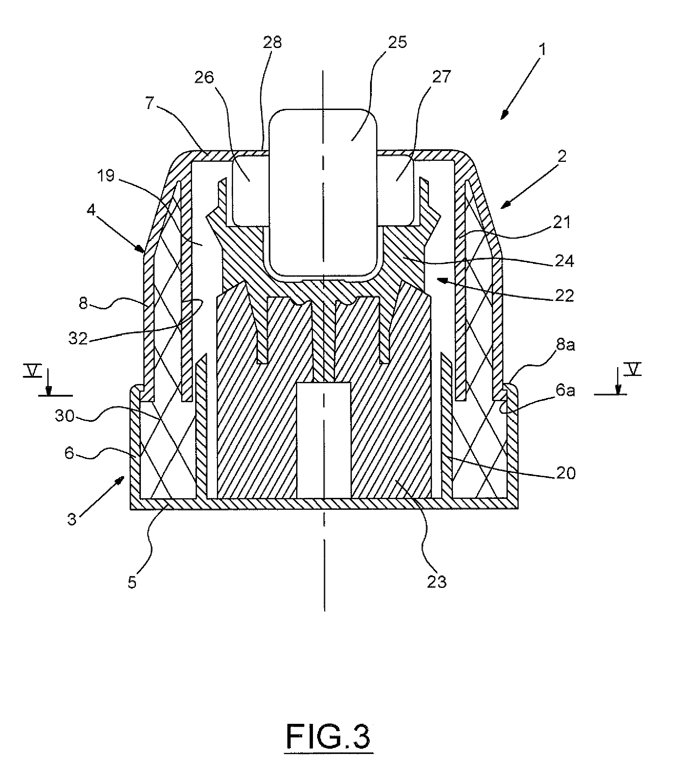

Comme le montrent les figures 3 et 5, le carter 2 présente, entre sa paroi arrière 5 et sa paroi frontale 7, des compartiments internes 19. Chaque compartiment 19 est délimité latéralement par une paroi annulaire 20 en saillie par rapport à la paroi arrière 5 et une paroi annulaire 21 en saillie par rapport à la paroi avant 7, ces parois 20 et 21 étant accouplées de façon télescopique.

Dans chaque compartiment 19 est disposé un moyen d'amortissement principal 22 qui comprend, d'arrière en avant, un bloc d'amortissement 23 en un matériau élastique, en appui sur la paroi arrière 5, une cage 24 en appui sur le bloc 23 et un galet 25 à axe horizontale, dont les axes latéraux 26 et 27 sont portés par la cage 24 et engagés dans des parties en U de cette cage. Une portion de la périphérie du galet 25 est engagée au travers d'un passage adapté 28 de la paroi frontale 7, de telle sorte que cette portion s'étende à l'extérieur du carter 2, au-delà de cette paroi frontale 7 et que les axes 26 et 27 viennent en appui contre la face interne de la paroi frontale 7.

Comme le montre la figure 5, la paroi arrière 5 est muni de nervures de renforcement 29 de faibles épaisseurs.

Comme le montrent plus particulièrement les figures 3 et 4, le tampon amortisseur de chocs 1 comprend un moyen d'amortissement complémentaire constitué par un bloc d'amortissement 30 en une matière élastique, qui remplit approximativement le carter 2 et qui présente des passages 31 et 32 au travers desquels s'étendent les parois internes définissant les passages 9 et les compartiments 19.

Dans la position initiale précitée de la partie avant 4 du carter 2 par rapport à sa partie arrière 3, les blocs d'amortissement 23 et 30 sont légèrement comprimés ou précontraints.

Lorsque le tampon amortisseur de chocs 1 rencontre une face approximativement verticale d'un obstacle qui ainsi se déplace en direction de la paroi arrière 5 du carter 2, l'effet d'amortissement se décompose de la manière suivante.

Dans une première phase, les galets 25 s'enfoncent dans le carter 2 en comprimant les blocs d'amortissement 23 des moyens d'amortissement principaux 22.

Lorsque les galets 25 sont complètement enfoncés dans le carter 2, l'obstacle vient en contact avec la face frontale 7.

Dans une seconde phase, la partie avant 4 du carter 2 se déplace vers l'arrière par rapport à la partie arrière 3 en comprimant le bloc d'amortissement 30 entre la paroi frontale 7 et la paroi arrière 5 qui se rapprochent, les blocs d'amortissement 23 des moyens d'amortissement principaux 22 continuant de se comprimer. A partir de la position initiale précitée, la paroi périphérique et les parois internes de la partie avant 4 du carter 2 glissent par rapport aux parois correspondantes de sa partie arrière 3, en direction de la paroi arrière 5, les rebords 6a et 8a s'éloignant l'un de l'autre et l'épaulement annulaire 12 s'éloignant de la rondelle 18.

Bien entendu, si l'obstacle se retire au cours des phases ci-dessus, le tampon amortisseur de chocs 1 revient à sa position initiale.

Le tampon amortisseur de chocs 1 peut être obtenu de la manière suivante.

On met en place les moyens amortisseurs principaux 22 et le bloc d'amortissement complémentaire 30 dans la partie arrière 3 du carter 2. Puis, on accouple la partie avant 4 du carter 2 en les coiffant, jusqu'à ce que les rebords 6a et 8a viennent en arrière l'un de l'autre en passant l'un au-dessus de l'autre. Cette opération de montage engendre une compression initiale ou une précontrainte initiale des blocs d'amortissement 23 et du bloc d'amortissement complémentaire 30 dans le sens de l'accouplement.

Les blocs d'amortissement 23 et 30 sont de préférence en une matière caoutchouteuse et/ou en une matière synthétique élastique. Les cages 24 et les galets 25 sont de préférence en métal ou en une matière synthétique à haute résistance.

Dans une variante, les blocs d'amortissement 23 et 30 pourraient être remplacés par des ressorts convenablement répartis ou par des billes élastiques.

La présente invention ne se limite pas à l'exemple ci-dessus. Bien des variantes sont possibles sans sortir du cadre défini par les revendications annexées.

## Revendications

1. Tampon amortisseur de chocs, notamment pour véhicule automobile, comprenant un carter présentant une paroi arrière d'appui et une paroi frontale et, dans ce carter, au moins un moyen d'amortissement principal comprenant une cage portant un galet dont une partie de la périphérie passe au travers d'un passage de ladite paroi frontale et s'étend au-delà de cette paroi et un moyen élastique interposé entre ladite cage et ladite paroi arrière, **caractérisé par le fait que** ledit carter (2) comprend au moins une partie avant (4) comprenant ladite paroi frontale (7) et une partie arrière (3) comprenant ladite paroi arrière (5) et qu'il comprend, dans ce carter, un moyen d'amortissement complémentaire (30) interposé entre lesdites parties avant et arrière dudit carter, de telle sorte que, lorsqu'un obstacle se déplace en direction de ladite paroi arrière dudit carter, l'effet d'amortissement comprend une première phase dans laquelle le galet (25) s'enfonce dans le carter en comprimant ledit moyen élastique (23) dudit moyen d'amortissement principal et une seconde phase dans laquelle ladite paroi frontale de ladite partie avant du carter se rapproche de ladite paroi arrière de la partie arrière de ce carter en comprimant ledit moyen d'amortissement complémentaire (30) et ledit moyen élastique (23) dudit moyen d'amortissement continue de se comprimer.

2. Tampon amortisseur selon la revendication 1, **caractérisé par le fait que** ledit moyen élastique dudit moyen d'amortissement principal comprend au moins un bloc en un matériau élastique.

3. Tampon amortisseur selon l'une des revendications 1 et 2, **caractérisé par le fait que** ledit moyen d'amortissement complémentaire comprend au moins un bloc en un matériau élastique.

4. Tampon amortisseur selon l'une quelconque des revendications précédentes, **caractérisé par le fait que** ledit bloc en un matériau élastique dudit moyen d'amortissement complémentaire est interposé entre ladite paroi frontale et ladite paroi arrière dudit carter.

5. Tampon amortisseur selon l'une quelconque des revendications précédentes, **caractérisé par le fait que** ladite partie avant et la partie arrière du carter comprennent des parois annulaires télescopiques (20, 21) déterminant un compartiment (19) dans lequel est disposé ledit moyen d'amortissement principal.

6. Tampon amortisseur selon l'une quelconque des revendications précédentes, **caractérisé par le fait que** ladite partie avant et la partie arrière du carter comprennent des parois télescopiques (6, 8) déterminant un compartiment dans lequel est disposé ledit moyen d'amortissement complémentaire (30).

7. Tampon amortisseur selon l'une quelconque des revendications précédentes, **caractérisé par le fait que** ladite partie avant et la partie arrière du carter sont en forme de cuvettes opposées accouplées de façon télescopique, le bord de la partie avant étant engagé dans le bord de la partie arrière.

8. Tampon amortisseur selon la revendication 6, **caractérisé par le fait que** lesdits bords présentent des rebords en saillie d'accrochage (6a, 8a).

9. Tampon amortisseur selon l'une quelconque des revendications précédentes, **caractérisé par le fait que** ledit carter présente au moins un passage (9) traversant d'avant en arrière, déterminé par une paroi interne de sa partie avant en saillie par rapport à ladite paroi frontale et une paroi interne de sa partie arrière en saillie par rapport à ladite paroi arrière et s'engageant dans la paroi interne de sa partie avant, ladite paroi interne de ladite partie avant présentant un épaulement interne (12).
